(19) 

Europäisches
Patentamt
European
Patent Office
Office européen
des brevets

(11) **EP 2 764 977 A1**

(12) **EUROPEAN PATENT APPLICATION**
published in accordance with Art. 153(4) EPC

(43) Date of publication:
**13.08.2014 Bulletin 2014/33**

(21) Application number: **12838098.7**

(22) Date of filing: **25.09.2012**

(51) Int Cl.:
*B29C 47/88* (2006.01)    *B29C 47/92* (2006.01)
*G02B 1/04* (2006.01)    *B29K 33/04* (2006.01)
*B29L 7/00* (2006.01)

(86) International application number:
**PCT/JP2012/074557**

(87) International publication number:
**WO 2013/051430 (11.04.2013 Gazette 2013/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.10.2011 JP 2011220321**

(71) Applicants:
• **Keio University**
**Tokyo 108-8345 (JP)**
• **JX Nippon Oil & Energy Corporation**
**Chiyoda-ku**
**Tokyo 100-8162 (JP)**

(72) Inventors:
• **KOIKE Yasuhiro**
**Yokohama-shi**
**Kanagawa 223-8522 (JP)**

• **TAGAYA Akihiro**
**Yokohama-shi**
**Kanagawa 223-8522 (JP)**
• **MATSUMURA Yasuo**
**Tokyo 100-8162 (JP)**
• **MATSUO Akira**
**Tokyo 100-8162 (JP)**
• **UCHIZAWA Sayako**
**Tokyo 100-8162 (JP)**

(74) Representative: **Müller-Boré & Partner**
**Patentanwälte PartG mbB**
**Friedenheimer Brücke 21**
**80639 München (DE)**

(54) **OPTICAL FILM AND LIQUID CRYSTAL DISPLAY DEVICE PROVIDED WITH SAME**

(57)     Disclosed is an optical film produced by a method comprising continuously discharging a molten resin on a casting roll through a die lip of an extruder, wherein the molten resin contains a copolymer of (A) 75 to 99% by weight of an (meth)acrylate monomer that, when homopolymerized, has a negative intrinsic birefringence, and (B) 1 to 25% by weight of an (meth)acrylate monomer that, when homopolymerized, has a positive intrinsic birefringence, and a velocity ratio $V_2/V_1$ of 1.2 to 15 is satisfied wherein $V_1$ represents a discharge velocity of the molten resin from the die lip, m/min; and $V_2$ represents a surface velocity of the casting roll, m/min.

EP 2 764 977 A1

**Description**

<u>Technical Field</u>

The present invention relates to an optical film and a liquid crystal display device comprising the optical film.

<u>Background of the invention</u>

Various film-shaped optical members used in various optics-related devices (for example, films used in liquid crystal display devices and substrates of prism sheets) are generally called "optical films." Birefringence is one of optical properties important in the optical films. That is, large birefringence is sometimes unfavorable for optical films. In particular, in liquid crystal display devices in IPS mode, the presence of a film having large birefringence adversely affects image quality, and, thus, the use of an optical film having minimized birefringence has been desired.

Patent document 1 describes a non-birefringent optical resin material that consists only of a copolymer in three or higher dimension, or that consists of a copolymer in two or higher dimension and at least one low-molecular organic compound which has anisotropic polarizability and can be oriented in the polymer, the component ratio being selected so as to simultaneously offset orientation birefringence and photoelastic birefringence.

Patent document 2 describes an optical film that is composed of an acrylic resin having a cyclic structure in its main chain and has been drawn by a biaxial drawing.

Non-patent document 1 describes a method for offsetting the birefringence of a polymer chain that includes randomly copolymerizing a monomer for constituting a homopolymer having a positive birefringence with a monomer for constituting a homopolymer having a negative birefringence at a proper monomer ratio. In the non-patent document 1, benzyl methacrylate and methyl methacrylate are selected as a positive birefringence monomer and as a negative birefringence monomer, respectively, and random copolymerization is then carried out. The non-patent document 1 describes that an orientation birefringence substantially disappears at a methyl methacrylate monomer : benzyl methacrylate monomer weight ratio of 82 : 18 and a photoelastic birefringence substantially disappears at a methyl methacrylate monomer: benzyl methacrylate monomer weight ratio of 92 : 8.

PRIOR ART DOCUMENTS

Patent Documents

Patent document 1: Japanese Patent Application Laid-Open No. 308682/2006
Patent document 2: Japanese Patent Application Laid-Open No. 72135/2010

Non-patent Document

Non-patent document 1: Shuichi Iwata, Hisashi Tsukahara, Eisuke Nihei, and Yasuhiro Koike, Applied Optics, Vol. 36, p. 4549-4555 (1997)

[SUMMARY OF THE INVENTION]

<u>Problems to be Solved by the Invention</u>

In recent years, there is an ever-increasing demand for improved image quality of liquid crystal display devices, and there is also an increasing demand for optical films having a low birefringence. Further, the price of liquid crystal display devices continuously lowers, and, thus, there is also an increasing demand for the development of inexpensive optical films.

As described in the patent document 1, in principle, a polymer film that can simultaneously offset the orientation birefringence and the photoelastic birefringence can be prepared by regulating the mixing ratio of three or more starting materials. In this case, however, many equipments are necessary for introducing starting materials. This method suffers from a problem that the amount of many starting materials introduced should be regulated and controlled. Accordingly, the preparation of films having a low birefringence from two monomers is industrially valuable from the viewpoint of production cost.

The claimed advantage of the patent document 2 is that, in a film formed of a polymer of an acrylic resin having a cyclic structure in its main chain, mechanical properties of the film can be improved by a biaxial drawing to such a level that does not suffer from a practical problem. In films formed using, as materials, polymers other than acrylic resins that have a cyclic structure in its main chain and are expensive and special, difficulties are experienced in simultaneously realizing low birefringence and mechanical properties and, at the same time, such films suffer from the following production problem. Specifically, a web film formed using, as a material, a copolymer of an (meth)acrylate monomer is very fragile, and thus, the film cannot be stably produced, because, in steps carried out before the drawing step, a problem of breaking of the film during conveying on a production line or a problem of breaking of the film during drawing in the drawing step occurs.

The method described in the non-patent document 1 suffers from a problem of very low mechanical properties in terms of flex resistance and cracking resistance as an optical film.

An "orientation birefringence" mainly derived from the orientation of the main chain of the polymer and a "photoelastic birefringence" derived from stress applied to the film may be mentioned as the birefringence exhibited by the optical film. The sign of the orientation birefringence and the sign of the photoelastic birefringence derive from the chemical structure of the polymer and each are inherent properties of respective polymers.

The orientation birefringence is generally a birefringence developed by the orientation of the main chain of a polymer having a chain-like structure, and the orientation of the main chain occurs, for example, in a process involving flow of the material such as a process of extrusion or drawing in polymer film production and is fixed and remains in the film.

On the other hand, the photoelastic birefringence is a birefringence caused by elastic deformation of the film. For example, volume shrinkage that occurs by cooling from a temperature around the glass transition temperature of the polymer to a temperature below the transition temperature causes elastic stress to remain within the film, which is causative of the photoelatstic birefringence. Further, external force which the optical film receives in such a state that the optical film is fixed to a device at an ordinary temperature also leads to the occurrence of stress in the film that in turn leads to the development of photoelastic birefringence.

An object of the present invention is to provide an optical film that is low in both the orientation birefringence and the photoelastic birefringence and has excellent mechanical properties, for example, in terms of flex resistance, cracking resistance, and tensile strength, and a method for producing the optical film. Another object of the present invention is to provide a liquid crystal display device comprising the optical film.

Means for Solving the Problems

According to one aspect of the present invention, there is provided an optical film produced by a method comprising continuously discharging a molten resin on a casting roll through a die lip of an extruder, wherein the molten resin contains a copolymer of (A) 75 to 99% by weight of an (meth)acrylate monomer that, when homopolymerized, has a negative intrinsic birefringence, and (B) 1 to 25% by weight of an (meth)acrylate monomer that, when homopolymerized, has a positive intrinsic birefringence, and a velocity ratio $V_2/V_1$ of 1.2 to 15 is satisfied wherein $V_1$ represents a discharge velocity of the molten resin from the die lip, m/min; and $V_2$ represents a surface velocity of the casting roll, m/min.

The optical film is low in both the orientation birefringence and the photoelastic birefringence and has excellent mechanical properties, for example, in terms of flex resistance, cracking resistance, and tensile strength. Accordingly, the optical film is suitable for use as optical members for optics-related devices such as liquid crystal display devices.

In the present invention, preferably, the sign of a photoelastic coefficient of a homopolymer of the (meth)acrylate monomer (A) is opposite to the sign of the photoelastic coefficient of a homopolymer of the (meth)acrylate monomer (B).

In one embodiment of the present invention, both the absolute value of an in-plane phase difference, Re, and the absolute value of a through-thickness phase difference, Rth, are not more than 8 nm.

In one embodiment of the present invention, the absolute value of the photoelastic coefficient is not more than $8 \times 10^{-12}$ (/Pa).

In one embodiment of the present invention, the sum of the tensile strength in a conveying direction caused by the casting roll and the tensile strength in a widthwise direction perpendicular to the conveying direction is 140 MPa to 330 MPa.

According to another aspect of the present invention, there is provided a liquid crystal display device comprising the optical film. The optical film is low in both the orientation birefringence and the photoelastic birefringence and thus can satisfactorily reduce an adverse effect on the image quality. Therefore, the liquid crystal display device can realize good image quality.

According to a further aspect of the present invention, there is provided a method for producing an optical film, the method comprising a film forming step of continuously discharging a molten resin on a casting roll through a die lip of an extruder, wherein the molten resin contains a copolymer of (A) 75 to 99% by weight of an (meth)acrylate monomer that, when homopolymerized, has a negative intrinsic birefringence, and (B) 1 to 25% by weight of an (meth)acrylate monomer that, when homopolymerized, has a positive intrinsic birefringence, and a velocity ratio $V_2/V_1$ of 1.2 to 15 is satisfied wherein $V_1$ represents a discharge velocity of the molten resin from the die lip, m/min; and $V_2$ represents a surface velocity of the casting roll, m/min.

The production method can easily produce an optical film that is low in both the orientation birefringence and the photoelastic birefringence and has excellent mechanical properties, for example, in terms of flex resistance, cracking resistance, and tensile strength.

Effect of the Invention

The present invention can provide an optical film that is low in both the orientation birefringence and the photoelastic birefringence and has excellent mechanical properties, for example, in terms of flex resistance, cracking resistance, and tensile strength, and a method for producing the optical film. Further, the present invention can provide a liquid crystal device comprising the optical film.

[MODE FOR CARRYING OUT THE INVENTION]

Preferred embodiments of the optical film and the liquid crystal display device according to the present invention will be described.

The optical film according to this embodiment is a film produced by continuously discharging a molten resin on a casting roll through a die lip of an extruder.

The molten resin contains a copolymer of (A) 75 to 99% by weight (preferably 80 to 95% by weight, more preferably 85 to 95% by weight) of an (meth)acrylate monomer that, when homopolymerized, has a negative intrinsic birefringence, and (B) 1 to 25% by weight (preferably 5 to 20% by weight, more preferably 5 to 15% by weight) of an (meth)acrylate monomer that, when homopolymerized, has a positive intrinsic birefringence.

In this embodiment, the velocity ratio $V_2/V_1$ of 1.2 to 15 is satisfied wherein $V_1$ represents a discharge velocity of the molten resin from the die lip, m/min; and $V_2$ represents a surface velocity of the casting roll, m/min.

This optical film is low in both the orientation birefringence and the photoelastic birefringence and has excellent mechanical properties, for example, in terms of flex resistance, cracking resistance, and tensile strength. Accordingly, the optical film is suitable for use as optical members for optics-related devices such as liquid crystal display devices.

The (meth)acrylate monomer (A) is a monomer component that, when homopolymerized, has a negative intrinsic birefringence. Alkyl methacrylates and the like may be mentioned as the (meth)acrylate monomer (A). Specific examples thereof include methyl methacrylate, methyl acrylate, isobornyl methacrylate, dicyclopentanyl methacrylate, ethyladamantyl methacrylate, methyladamantyl methacrylate, ethyl methacrylate, butyl methacrylate, and cyclohexyl methacrylate. Among them, methyl methacrylate that is mass-produced as a starting material for general-purpose resins called acrylic glass is inexpensive and preferred.

The (meth)acrylate monomer (B) is a monomer that, when homopolymerized, has a positive intrinsic birefringence. Specific examples thereof include, but are not limited to, benzyl methacrylate, phenoxyethyl methacrylate, phenoxydiethylene glycol methacrylate, biphenyl methacrylate, 2,2,2-trifluoroethyl methacrylate, pentafluorobenzyl methacrylate, trifluorophenyl methacrylate, trihydroperfluoropropyl methacrylate, phenoxyethyl acrylate, and (meth)acrylic esters of fluorine-substituted aromatic groups.

In view of cost effectiveness, the (meth)acrylate monomer (A) having a negative intrinsic birefringence is preferably methyl methacrylate, and the (meth)acrylate monomer (B) having a positive intrinsic birefringence can be properly selected from the above exemplified monomers. Among them, benzyl methacrylate or phenoxyethyl methacrylate is preferred as the (meth)acrylate monomer (B).

A combination of methyl methacrylate/benzyl methacrylate or a combination of methyl methacrylate/phenoxyethyl methacrylate has a polymerization reactivity ratio of about 1 and is a particularly preferred combination. The closer the polymerization reactivity ratio to 1, the higher the random copolymerizability. In this case, since a polymer having a substantially identical comonomer ratio can be obtained from an early stage of the polymerization to an end of the polymerization, a copolymer that is essentially less likely to cause phase separation, has no significant scattering loss, and is highly transparent can easily be obtained. On the other hand, when the reactivity ratio is different, the comonomer ratio at an early stage of the polymerization is different from the comonomer ratio at an end of the polymerization and a heterogeneous microstructure is likely to be formed. When the difference in comonomer ratio between polymerization stages is large, a phenomenon that is the same as a phenomenon that occurs in blending dissimilar polymers is likely to occur in the copolymer. When the difference in comonomer ratio between polymerization stages is significantly large, the polymer is opaque and is unsuitable for optics applications.

The copolymer can be obtained, for example, by selecting one (meth)acrylate monomer (A) with one (meth)acrylate monomer (B) and copolymerizing these monomers. A method may also be adopted in which a copolymer is obtained by selecting a plurality of (meth)acrylate monomers (A) and a plurality of (meth)acrylate monomers (B) and copolymerizing the monomers.

The copolymer may also be one obtained by adding other monomer(s) to the selected (meth)acrylate monomer (A) and (meth)acrylate monomer (B) and copolymerizing the monomers. For example, as described in Japanese Patent Application Laid-Open No. 233912/2001, it is known that, when a methacrylic resin is copolymerized with 1 to 5% by weight of an alkyl acrylate, thermal decomposition is inhibited. Accordingly, when a methacrylate monomer is selected as the (meth)acrylate monomer (A), a part (for example, 1 to 5% by weight) of the methacrylate monomer may be replaced with an alkyl acrylate for heat resistance improvement purposes.

Preferably, the (meth)acrylate monomer (A) and the (meth)acrylate monomer (B) are selected so that the sign of the photoelastic coefficient of one of monomers, when homonpolymerized, is opposite to the sign of the photoelastic coefficient of the other monomer when homopolymerized. A copolymer obtained from the selected (meth)acrylate monomer (A) and (meth)acrylate monomer (B) is likely to have a lower photoelastic coefficient.

The weight average molecular weight of the copolymer is preferably not less than $5.0 \times 10^4$, more preferably not less than $1.0 \times 10^5$. In this copolymer, the main chain of a polymer is easily oriented by the specific method for film formation in this embodiment, and, thus, better mechanical properties can be obtained.

The weight average molecular weight of the copolymer is preferably not more than $4.0 \times 10^5$, more preferably not more than $3.0 \times 10^5$. This copolymer has a satisfactorily low melt viscosity, and, thus, a film can be more easily formed from the copolymer.

The weight average molecular weight of the copolymer was measured by HLC-8220 GPC manufactured by Tosoh Corporation. Super-MultiporeHZ-M manufactured by Tosoh Corporation was used as a column. The measurement was carried out under conditions of a flow rate of 0.35 ml/min and a column temperature of 40°C, and the weight average molecular weight was determined in terms of molecular weight using standard polystyrene.

Any of mass polymerization, suspension polymerization, emulsion polymerization, and solution polymerization may be applied as a copolymerization method. Here suspension polymerization will be described in detail as one embodiment of the copolymerization.

In this embodiment, (meth)acrylate monomer (A) and (meth)acrylate monomer (B) are first weighed at a desired weight ratio and are introduced into a suspension polymerization apparatus. Peroyl TCP (1 part by weight) manufactured by NOF Corporation as a polymerization initiator, 0.1 part by weight of 1-octanethiol as a chain transfer agent, 400 parts by weight of deionized water, and 0.6 part by weight of polyvinyl alcohol (Kuraray Poval manufactured by Kuraray Co., Ltd.) as a dispersant together are then introduced. Here the unit "parts by weight" of the introduction amount is a weight ratio of each additive to 100 parts by weight in total of the (meth)acrylate monomer (A) and the (meth)acrylate monomer (B). The type and introduction amount of the polymerization initiator, the chain transfer agent, the dispersant, and the buffer solution described above are just an example, and the type and the introduction amount are not limited to the above example.

A copolymer having a weight average molecular weight of $5.0 \times 10^4$ to $4.0 \times 10^5$ can be obtained by stirring a monomer phase and an aqueous phase for suspension in the suspension polymerization apparatus at 65°C for 2 hr and then at 85°C for one hr. The weight average molecular weight of the copolymer can be properly regulated by varying the type and introduction amount of the polymerization initiator and the chain transfer agent and the reaction temperature and the reaction time in the suspension polymerization apparatus.

The copolymer obtained in this embodiment is a powder or granules that are filtered and then satisfactorily washed before use in a film formation process which will be described later.

The molten resin may contain ingredients other than the copolymer, for example, antioxidants, lubricants, ultraviolet absorbers, and stabilizers.

The content of the copolymer in the molten resin is preferably 95 to 100% by weight, more preferably 99 to 100% by weight, based on the total amount of the molten resin.

The optical film in this embodiment can be obtained by a production method including a film forming step of continuously discharging a molten resin through die lip in an extruder onto a casting roll to form a film. One embodiment of the method for producing an optical film will be described in detail.

In this embodiment, the extruder is provided with a die lip (T-die) through which the molten resin is delivered. The molten resin is continuously delivered through the die lip in a predetermined thickness onto a casting roll. The molten resin delivered through the die lips is conveyed by the casting roll and, if necessary, is cooled for film formation.

The molten resin can be extruded through the extruder at a desired temperature. In this embodiment, the extrusion temperature is preferably 130°C to 300°C, more preferably 150°C to 280°C. When the extrusion temperature is 130°C or above, the molten resin containing the copolymer is satisfactorily melted and kneaded. Thus, the unmelted resin does not remain in the film, and, consequently, the production efficiency can be further improved. When the extrusion temperature is 300°C or below, coloring of the film by thermal decomposition and the deposition of thermal decomposition products on the die lip can be avoided.

In this embodiment, the rotation speed of the screw in the extruder, the rotation speed of the casting roll, and the lip clearance in the die lip are regulated so as to satisfy a ratio $V_2/V_1$ of 1.2 to 15 wherein $V_1$ represents a discharge velocity of the molten resin from the die lip, m/min; and $V_2$ represents a surface velocity of the casting roll, m/min.

Thus, the molten resin located between the die lip and the landing point on the casting roll is drawn and deformed by rendering the winding velocity of the molten resin by the casting roll faster than the discharge velocity of the molten resin. As a result, the film that has been cooled and solidified on the casting roll is less likely to be broken and can be stably conveyed.

This is achieved through a mechanism in which the main chain of the copolymer is oriented parallel to the plane of the film in a process of drawing deformation of the molten resin located between the die lip and the landing point on the casting roll. Further, an excellent effect, that is, the effect of improving cracking resistance while suppressing an increase in orientation birefringence as compared with the orientation of the main chain of the polymer by drawing, can be attained by adopting this method in the molten resin.

How to measure the discharge velocity of the molten resin through the die lip, i.e., $V_1$, will be described in detail. At the outset, the volume of the molten resin delivered in a one-minute period, i.e., VO ($m^3$), is determined. The volume VO ($m^3$) is expressed by equation (1):

$$VO = W \times L \times t \times \alpha \quad \ldots \quad (1)$$

wherein W represents the width of the film that has been formed in the one-minute period and cooled to room temperature (25°C), m; L represents the length, m; t represents the thickness of the film, m; and $\alpha$(-) represents the coefficient of volume expansion of the resin that has been brought to the temperature of the molten resin delivered from the state of room temperature 25°C.

The coefficient of volume expansion of the resin, i.e., $\alpha$(-), is represented by equation (2):

$$\alpha = \rho1/\rho2 \quad \ldots \quad (2)$$

wherein $\rho1$ represents the density of the film at room temperature (25°C), $g/cm^3$; and $\rho2$ represents the density of the molten resin at a discharge temperature of the molten resin delivered through the die-lip.

The density of the film at room temperature 25°C, i.e., $\rho1$ ($g/cm^3$), can be measured by generally known methods such as an underwater substitution method or a pycnometer method. The density of the molten resin at a discharge temperature of the molten resin delivered through the die lip, i.e., p2 ($g/cm^3$), may be measured with a melt indexer F-F01 (manufactured by Toyo Seiki Co., Ltd.) that is a melt mass flow rate or melt volume flow rate measuring device.

After the volume of the molten resin delivered in a one-minute period through the die lip, i.e., VO ($m^3$), is determined, the discharge velocity of the molten resin through the die lip, i.e., $V_1$ (m/min), can be calculated using the sectional area of an opening at the front end of the die lip, i.e., A ($m^2$), by equation (3):

$$V_1 = VO/A \quad \ldots \quad (3)$$

The surface velocity of the casting roll, i.e., $V_2$ (m/min), is determined by the outer circumferential velocity of the casting roll and is the same meaning as the conveying velocity of the film that has been cooled and solidified on the casting roll.

The die lip in the extruder is generally equipped with a mechanism through which the lip clearance can be arbitrarily regulated by a push-pull bolt. The sectional area of the opening at the front end of the die lip, A ($m^2$), can be regulated by this mechanism for regulating the lip clearance, and, consequently, a film having a given thickness can be formed even by varying the ratio between the discharge velocity of the molten resin, $V_1$ (m/min), and the surface velocity of the casting roll, $V_2$ (m/min).

The ratio $V_2/V_1$ is 1.2 to 15, more preferably 1.3 to 10, still more preferably 1.4 to 8. A ratio $V_2/V_1$ of less than 1.2 is disadvantageous in that the film that has been cooled and solidified on the casting roll is fragile and thus is broken during line conveying, making it impossible to wind the film, or in that, when the step of film formation and the drawing step that will be described later constitute a continuous through-line, a web film cannot be fed to the drawing step. That is, when the ratio $V_2/V_1$ is less than 1.2, the optical film cannot be stably produced using the molten resin. On the other hand, a ratio $V_2/V_1$ of larger than 15 is disadvantageous, for example, in that a variation in thickness of the web film is increased or in that holes are formed in the molten resin delivered through the die lip.

The film formed by the step of film formation can if necessary be sent to the drawing step. For example, when the sum of the tensile strength in the conveying direction and the tensile strength in the widthwise direction is less than 140 MPa in the measurement of the tensile strength of the film passed through the step of film formation, preferably, the film is sent to the drawing step for better cracking resistance. When the sum is not less than 140 MPa, the drawing step is not always necessary.

In the drawing step, the film formed in the step of film formation is drawn. Drawing methods include, for example, vertical drawing between rolls using a circumferential velocity difference and lateral drawing using a tenter device, and a successive biaxial drawing method comprising a combination of these drawing methods may also be applied. Further, in the tenter drawing device, a simultaneous biaxial drawing apparatus in which the clip spacing for holding the end of the film is also increased in the conveying direction of the film.

The drawing device may constitute a continuous through-line with an extrusion film forming machine. Alternatively, a drawing method may also be adopted in which the web wound by the extrusion film forming machine is delivered offline to the drawing device.

The drawing temperature is preferably Tg + 2°C to Tg + 20°C, more preferably Tg + 5°C to Tg + 15°C, wherein Tg represents the glass transition temperature of the web film, °C. A drawing temperature below Tg + 2°C is disadvantageously sometimes likely to pose problems of breaking of the film during drawing and an increase in haze of the film. A drawing temperature above Tg + 20°C sometimes poses a problem that the main chain of the polymer is less likely to orient, and, consequently, a satisfactory degree of orientation of the main chain of the polymer cannot be sometimes obtained by drawing.

The drawing ratio is preferably in the range of 1.1 times to 3 times in at least one direction. When the drawing ratio is less than 1.1 times, the effect of improving the cracking resistance of the film by orientating the main chain of the polymer can be hardly attained. A drawing ratio of more than 3 times sometimes poses problems such as clouding of the film and breaking of the film.

Various properties of the optical film will be described in detail.

The thickness of the optical film is preferably 10 $\mu$m to 150 $\mu$m, more preferably 15 $\mu$sm to 120 $\mu$m, still more preferably 20 $\mu$m to 100 $\mu$m. When the thickness of the optical film is not less than 10 $\mu$m, handleability of the optical film, for example, in lamination of the optical film to a polarizing plate is improved. When the thickness of the film is not more than 150 $\mu$m, an increase in haze can be satisfactorily suppressed and, at the same time, an increase in material cost per unit area can also be suppressed.

The orientation birefringence of the optical film can be evaluated by measuring retardation that is an in-plane phase difference value of the film, Re, and a phase difference value in the thicknesswise direction, Rth, with an Axoscan apparatus manufactured by Axometrics.

Re is expressed by equation (4):

$$\text{Re} = (nx - ny) \times d \quad (nm) \quad \dots (4)$$

wherein nx represents the refractive index in an in-plane one direction; ny represents the refractive index in a direction perpendicular to the in-plane one direction; and d represents the thickness of the film, nm.

Rth is expressed by equation (5):

$$\text{Rth} = ((nx + ny)/2 - nz) \times d \quad (nm) \dots (5)$$

wherein nx represents the refractive index in an in-plane one direction; ny represents the refractive index in a direction perpendicular to the in-plane one direction; nz represents the refractive index in the thicknesswise direction of the film; and d represents the thickness of the film, nm.

In optical films having a low birefringence that are used, for example, in protective films for polarizing plates in liquid crystal display devices, the smaller the absolute values of Re and Rth, the better the image quality. Preferably, both the absolute values of Re and Rth are not more than 8 nm, more preferably not more than 5 nm, still more preferably not more than 3 nm.

In this embodiment, the type of the (meth)acrylate monomer (A) and the type of the (meth)acrylate monomer (B) are selected so that the absolute value of Re and the absolute value of Rth are, for example, not more than 8 nm, the ratio of comonomers is regulated, the ratio $V_2/V_1$ is regulated, and, further, if necessary, the drawing ratio in the drawing step is regulated.

The photoelastic birefringence of the optical film is determined as a photoelastic coefficient C [1/Pa] by measuring, as with the orientation birefringence, the level of change in retardation (Re) (a phase difference value) of the film caused by stress applied to the film with an Axoscan apparatus manufactured by Axometrics. Specifically, the photoelastic coefficient C is calculated by equation (6).

$$C = \Delta \text{Re}/(\Delta \sigma \times t) \quad \dots (6)$$

wherein $\Delta\sigma$ represents the level of change in stress applied to the film, Pa; t represents the thickness of the film, m; and $\Delta$Re represents the level of change in in-plane phase difference value corresponding to the level of change in stress indicated by $\Delta\sigma$, m.

In optical films having a low birefringence that are used, for example, in protective films for polarizing plates in liquid crystal display devices, the smaller the absolute value of the photoelastic coefficient C, the better the image quality. The photoelastic coefficient C is preferably not more than $8 \times 10^{-12}$ (/Pa), more preferably not more than $5 \times 10^{-12}$ (/Pa), still more preferably not more than $3 \times 10^{-12}$ (/Pa).

In this embodiment, the type of the (meth)acrylate monomer (A) and the type of the (meth)acrylate monomer (B) are selected so that the photoelastic coefficient C is, for example, not more than $8 \times 10^{-12}$ (/Pa), the ratio of comonomers is regulated, the ratio $V_2/V_1$ is regulated, and, further, if necessary, the drawing ratio in the drawing step is regulated.

The tensile strength of the optical film may be measured with Strograph EII manufactured by Toyo Seiki Seisaku Sho, Ltd., model EII-L05, according to the standards of JIS (Japanese Industrial Standards) K7161. The tensile strength is a maximum tensile stress applied during the tensile test. The tensile strength is expressed in MPa.

In general, the tensile strength of the polymer film varies depending upon the type of monomers and the ratio of comonomers, as well as the oriented state of the main chain of the polymer. For example, the tensile strength in a direction in which the main chain of the polymer is oriented is increased, and the tensile strength in a direction perpendicular to the direction in which the main chain of the polymer is oriented is lowered. In films in which the main chain of the polymer is oriented parallel to the plane of the film, as with biaxial drawn films, the tensile strength in both the conveying direction and the widthwise direction is increased. Accordingly, the sum of the tensile strength in the conveying direction of the film and the tensile strength in the widthwise direction of the film is one indication of the degree of orientation of the main chain of the polymer parallel to the plane of the film.

In this embodiment, the sum of the tensile strength in the conveying direction of the optical film and the tensile strength in the widthwise direction of the optical film is preferably 140 MPa to 330 MPa, more preferably 150 MPa to 310 MPa, still more preferably 160 MPa to 300 MPa. When the molten resin is used, optical films that simultaneously realize better low birefringence and cracking resistance can be obtained by producing optical films having the above-defined sum range.

When the sum is not less than 140 MPa, a mechanical strength suitable as the optical film can be obtained and the occurrence of cracking and the like can be satisfactorily suppressed. When the sum is not more than 330 MPa, Rth that is a phase difference value in the thicknesswise direction is further lowered and, at the same time, an increase in haze is satisfactorily suppressed contributing to the provision of excellent transparency. Accordingly, such optical films can be used more suitably, for example, in protective films for polarizing plates in liquid crystal display devices.

Subsequently, the method for evaluating the cracking resistance of the optical film will be described. A simple method that evaluates the cracking resistance of the optical film is to count the number of times of flexing that causes breaking when the film is repeatedly flexed from -180° to 180°. When the sum of the number of times of flexing that causes breaking when the film is flexed in the conveying direction of the film, and the number of times of flexing that causes breaking when the film is flexed in the widthwise direction of the film is 10 (times) or more, the cracking resistance is good and the film can be used more suitably as the optical film.

For example, a method for evaluating cracking resistance of the protective film for a polarizing plate is a heat shock test that includes laminating the film to a glass substrate through a paste and repeating temperature raising and temperature falling from -20°C to 60°C at intervals of 30 min by 500 cycles. When the sum of the number of times of flexing that causes breaking in the flexing test is 10 times or more, the occurrence of cracking can also be satisfactorily suppressed in the heat shock test. Accordingly, it can be said that, in the film flexing test, when the sum of the number of times of flexing that causes breaking when the film is repeatedly flexed in the conveying direction, and the number of times of flexing that causes breaking when the film is repeatedly flexed in the widthwise direction is 10 (times) or more, the film has better cracking resistance as the optical film also from the viewpoint of the heat shock test.

Preferred embodiments have been described above. However, it should be noted that the present invention is not limited to the above embodiments.

[EXAMPLES]

The present invention is further illustrated by the following Examples that are not intended as a limitation of the invention.

Example 1

Methyl methacrylate was provided as an (meth)acrylate monomer (A), and benzyl methacrylate was provided as an (meth)acrylate monomer (B). A particulate polymer (hereinafter sometimes referred to as "polymer (A-1)") was obtained by copolymerizing 98% by weight of methyl methacrylate and 2% by weight of benzyl methacrylate by suspension polymerization. The weight average molecular weight of the polymer (A-1) was measured by gel permeation chromatography and was found to be $1.8 \times 10^5$. Further, the glass transition temperature of the polymer (A-1) was measured by differential scanning calorimetry and was found to be 105°C.

The particulate polymer (A-1) was extruded with a twin-screw extruder KZW-30MG manufactured by TECHNOVEL CORPORATION into a film. The diameter of the screw and the effective length (L/D) of the screw in the twin-screw extruder were 15 mm and 30, respectively, and a hanger coat-type T-die was installed in the extruder through an adapter. A mechanism that can regulate a lip clearance as desired in a range of 20 ($\mu$m) to 1000 ($\mu$m) by a push-pull bolt was provided in the lip portion of the T-die. The mechanism through which the lip clearance can be regulated can allow a film having a given thickness to be formed even when the ratio between the discharge velocity of the molten resin, $V_1$ (m/min), and the velocity of the surface of the casting roll, $V_2$ (m/min), is varied. The melt of the polymer was delivered in a curtain form through the T-die lip onto a cooling roll, was conveyed while being cooled to room temperature, and was wound around a winding roll to prepare a film. The extruding temperature Tp (°C) was 219°C because, in a noncrystalline polymer having a glass transition temperature of Tg (°C), the extruding temperature is generally known to be optimally determined by formula (7).

$$Tp = 5(Tg + 70)/4 \quad …(7)$$

Here the discharge velocity of the molten resin delivered through the lip of the T-die, $V_1$, the surface velocity of the casting roll, $V_2$, and the ratio $V_2/V_1$ were 0.4 (m/min), 1.0 (m/min), and 2.5(-), respectively. For the film thus obtained, the thickness, the in-plane phase difference, Re, and the phase difference in the thicknesswise direction, Rth, were 40 ($\mu$m), -4.0 (nm), and -3.5 (nm), respectively. The photoelastic coefficient C was $-3.5 \times 10^{-12}$ (1/Pa).

The tensile strength of the film was measured. As a result, the sum of the tensile strength in the conveying direction and the tensile strength in the widthwise direction was 143 (MPa). The film was subjected to a flexing test. As a result, the sum of the number of times of flexing that, when the film was flexed in the conveying direction, caused breaking, and the number of times of flexing that, when the film was flexed in the widthwise direction, caused breaking was 10 (times).

The film was visually inspected. As a result, the film was not opaque but was highly transparent. Further, since both the absolute value of Re and the absolute value of Rth were not more than 8 (nm) and, at the same time, the photoelastic coefficient C was not more than $8 \times 10^{-12}$ (1/Pa), the film, even when used as a protective film for a polarizing plate in a liquid crystal display device, did not cause a deterioration in image quality. Further, since the sum of the number of times of flexing that, when the film was flexed in the conveying direction, caused breaking, and the number of times of flexing that, when the film was flexed in the widthwise direction, caused breaking was not less than 10 (times), the film could withstand a heat shock test of a polarizing plate and did not suffer from cracking resistance. The film was an optical film that was highly transparent and that satisfied both low birefringence and cracking resistance requirements.

Example 2

A film was produced in the same manner as in Example 1, except that the discharge velocity of the molten resin delivered through the lip in the T-die, $V_1$, the surface velocity of the casting roll, $V_2$, and the ratio $V_2/V_1$ were 0.25 (m/min), 1.0 (m/min), and 4(-), respectively.

For the film thus obtained, the thickness, the in-plane phase difference, Re, and the phase difference in the thicknesswise direction, Rth, were 40 ($\mu$m), -8.0 (nm), and -7.0 (nm), respectively. The photoelastic coefficient C was $-3.5 \times 10^{-12}$ (1/Pa). The sum of the tensile strength in the conveying direction and the tensile strength in the widthwise direction was 166 (MPa). The sum of the number of times of flexing that, when the film was flexed in the conveying direction, caused breaking, and the number of times of flexing that, when the film was flexed in the widthwise direction, caused breaking was 18 (times).

The film was an optical film that was highly transparent and that satisfied both low birefringence and cracking resistance requirements.

Example 3

A particulate polymer (hereinafter sometimes referred to as "polymer (A-2)") was obtained by selecting methyl methacrylate as (meth)acrylate monomer (A) and benzyl methacrylate as (meth)acrylate monomer (B) and copolymerizing 92% by weight of methyl methacrylate and 8% by weight of benzyl methacrylate by suspension polymerization. The weight average molecular weight of the polymer (A-2) was measured by gel permeation chromatography and was found to be $1.8 \times 10^5$. Further, the glass transition temperature of the polymer (A-2) was measured by differential scanning calorimetry and was found to be 103°C.

A film was produced in the same manner as in Example 1, except that the polymer (A-2) was used instead of the polymer (A-1). In Example 3, the discharge velocity of the molten resin delivered through the lip in the T-die, $V_1$, the surface velocity of the casting roll, $V_2$, and the ratio $V_2/V_1$ were 0.4 (m/min), 1.0 (m/min), and 2.5(-), respectively.

For the film thus obtained, the thickness, the in-plane phase difference, Re, and the phase difference in the thicknesswise direction, Rth, were 40 ($\mu$m), -1.0 (nm), and -1.0 (nm), respectively. The photoelastic coefficient C was $0.1 \times 10^{-12}$ (1/Pa). The sum of the tensile strength in the conveying direction and the tensile strength in the widthwise direction was 160 (MPa). The sum of the number of times of flexing that, when the film was flexed in the conveying direction, caused breaking, and the number of times of flexing that, when the film was flexed in the widthwise direction, caused breaking was 20 (times).

The film was an optical film that was highly transparent and that satisfied both low birefringence and cracking resistance requirements.

Example 4

A film was produced in the same manner as in Example 3, except that the discharge velocity of the molten resin delivered through the lip in the T-die, $V_1$, the surface velocity of the casting roll, $V_2$, and the ratio $V_2/V_1$ were 0.25 (m/min), 3.75 (m/min), and 15(-), respectively.

For the film thus obtained, the thickness, the in-plane phase difference, Re, and the phase difference in the thicknesswise direction, Rth, were 40 ($\mu$m), -5.0 (nm), and -3.0 (nm), respectively. The photoelastic coefficient C was $0.1 \times 10^{-12}$ (1/Pa). The sum of the tensile strength in the conveying direction and the tensile strength in the widthwise direction was 180 (MPa). The sum of the number of times of flexing that, when the film was flexed in the conveying direction, caused breaking, and the number of times of flexing that, when the film was flexed in the widthwise direction, caused breaking was 40 (times).

The film was an optical film that was highly transparent and that satisfied both low birefringence and cracking resistance requirements.

Example 5

A film was produced in the same manner as in Example 3, except that the discharge velocity of the molten resin delivered through the lip in the T-die, $V_1$, the surface velocity of the casting roll, $V_2$, and the ratio $V_2/V_1$ were 1.0 (m/min), 1.2 (m/min), and 1.2(-), respectively. The thickness of the film was 40 ($\mu$m). However, as a result of the measurement of the tensile strength of the film, it was found that the sum of the tensile strength in the conveying direction and the tensile strength in the widthwise direction was 140 (MPa).

While maintaining the ratio $V_2/V_1$ at 1.2(-), a film was again produced by regulating the rotation speed of the screw in the extruder, the rotation speed of the casting roll, and the lip clearance in the T-die in the step of film formation so that the thickness of the film after the drawing step was 40 ($\mu$m).

The film thus obtained was subjected to free end uniaxial drawing with a film drawing machine IMC-190A manufactured by Imoto Machinary Co., Ltd. to obtain a drawn film. The drawing ratio in the conveying direction was 1.2 times(-), the drawing speed was 2.9 times/min, and the drawing temperature was (glass transition temperature) +9°C, that is, 112°C. The thickness of the film after drawing was 40 $\mu$m.

For the drawn film thus obtained, the in-plane phase difference, Re, and the phase difference in the thicknesswise direction, Rth, were -6.5 (nm) and -4.0 (nm), respectively. The photoelastic coefficient C was $0.1 \times 10^{-12}$ (1/Pa). The sum of the tensile strength in the conveying direction and the tensile strength in the widthwise direction was 165 (MPa). The sum of the number of times of flexing that, when the film was flexed in the conveying direction, caused breaking, and the number of times of flexing that, when the film was flexed in the widthwise direction, caused breaking was 20 (times).

The drawn film was an optical film that was highly transparent and that satisfied both low birefringence and cracking resistance requirements.

Example 6

A drawn film was produced in the same manner as in Example 5, except that, in the drawing step, the drawing was carried out by biaxial drawing simultaneously in the conveying direction and the widthwise direction at a drawing ratio of 1.2 times.

In Example 6 as well, while maintaining the ratio $V_2/V_1$ at 1.2(-) in the film forming step, the rotation speed of the screw in the extruder and the lip clearance in the T-die were regulated so that the thickness after drawing was 40 ($\mu$m). In the same manner as in Example 5, the drawing speed was 2.9 times/min in both the conveying direction and the widthwise direction and the drawing temperature was (glass transition temperature) +9°C, that is, 112°C.

For the drawn film thus obtained, the in-plane phase difference, Re, and the phase difference in the thicknesswise direction, Rth, were -1.0 (nm) and -8.0 (nm), respectively. The photoelastic coefficient C was $0.1 \times 10^{-12}$ (1/Pa). The sum of the tensile strength in the conveying direction and the tensile strength in the widthwise direction was 200 (MPa). The sum of the number of times of flexing that, when the film was flexed in the conveying direction, caused breaking, and the number of times of flexing that, when the film was flexed in the widthwise direction, caused breaking was 66 (times).

The drawn film was an optical film that was highly transparent and that satisfied both low birefringence and cracking resistance requirements.

Example 7

Methyl methacrylate was provided as an (meth)acrylate monomer (A), and benzyl methacrylate was provided as an (meth)acrylate monomer (B). A particulate polymer (hereinafter sometimes referred to as "polymer (A-3)") was obtained by copolymerizing 82% by weight of methyl methacrylate and 18% by weight of benzyl methacrylate by suspension polymerization. The weight average molecular weight of the polymer (A-3) was measured by gel permeation chromatography and was found to be $1.8 \times 10^5$. Further, the glass transition temperature of the polymer (A-3) was measured by differential scanning calorimetry and was found to be 101°C.

A film was produced in the same manner as in Example 1, except that the polymer (A-3) was used instead of the polymer (A-1). In Example 7, the discharge velocity of the molten resin delivered through the lip of the T-die, $V_1$, the surface velocity of the casting roll, $V_2$, and the ratio $V_2/V_1$ were 0.4 (m/min), 1.0 (m/min), and 2.5(-), respectively. For the film thus obtained, the thickness, the in-plane phase difference, Re, and the phase difference in the thicknesswise direction, Rth, were 40 ($\mu$m), 0.5 (nm), and 0.5 (nm), respectively. The photoelastic coefficient C was $6.0 \times 10^{-12}$ (1/Pa). The sum of the tensile strength in the conveying direction and the tensile strength in the widthwise direction was 160 (MPa), and the sum of the number of times of flexing that, when the film was flexed in the conveying direction, caused breaking, and the number of times of flexing that, when the film was flexed in the widthwise direction, caused breaking was 22 (times).

The film was an optical film that was highly transparent and that satisfied both low birefringence and cracking resistance requirements.

Example 8

A film was produced in the same manner as in Example 7, except that the discharge velocity of the molten resin delivered through the lip of the T-die, $V_1$, the surface velocity of the casting roll, $V_2$, and the ratio $V_2/V_1$ were 1.0 (m/min), 1.2 (m/min), and 1.2(-), respectively. The film had a thickness, of 40 ($\mu$m). The tensile strength of the film was measured and was found to be less than 140 (MPa) in terms of the sum of the tensile strength in the conveying direction and the tensile strength in the widthwise direction.

While maintaining the ratio $V_2/V_1$ at 1.2(-), a film was again produced by regulating the rotation speed of the screw in the extruder, the rotation speed of the casting roll, and the lip clearance in the T-die in the step of film formation so that the thickness of the film after the drawing step was 40 ($\mu$m).

The film thus obtained was subjected to simultaneous biaxial drawing with a film drawing machine IMC-190A manufactured by Imoto Machinary Co., Ltd. to obtain a drawn film. The drawing ratio was 1.8 times (-) in both the conveying direction and the widthwise direction, the drawing speed was 2.9 times/min, and the drawing temperature was (glass transition temperature) +9°C, that is, 110°C. The thickness of the film after drawing was 40 ($\mu$m).

For the drawn film thus obtained, the in-plane phase difference, Re, and the phase difference in the thicknesswise direction, Rth, were 1.0 (nm) and 2.0 (nm), respectively. The photoelastic coefficient C was $6.0 \times 10^{-12}$ (1/Pa). The sum of the tensile strength in the conveying direction and the tensile strength in the widthwise direction was 325 (MPa). The sum of the number of times of flexing that, when the film was flexed in the conveying direction, caused breaking, and the number of times of flexing that, when the film was flexed in the widthwise direction, caused breaking was 289 (times).

The film was an optical film that was highly transparent and that satisfied both low birefringence and cracking resistance requirements.

Example 9

Methyl methacrylate was provided as an (meth)acrylate monomer (A), and phenoxyethyl methacrylate was provided as an (meth)acrylate monomer (B). A particulate polymer (hereinafter sometimes referred to as "polymer (B-1)") was obtained by copolymerizing 92% by weight of methyl methacrylate and 8% by weight of phenoxyethyl methacrylate by suspension polymerization. The weight average molecular weight of the polymer (B-1) was measured by gel permeation chromatography and was found to be $1.8 \times 10^5$. Further, the glass transition temperature of the polymer (B-1) was measured by differential scanning calorimetry and was found to be 103°C.

A film was produced in the same manner as in Example 1, except that the polymer (B-1) was used instead of the polymer (A-1). In Example 9, the discharge velocity of the molten resin delivered through the lip of the T-die, $V_1$, the surface velocity of the casting roll, $V_2$, and the ratio $V_2/V_1$ were 0.4 (m/min), 1.0 (m/min), and 2.5(-), respectively. For the film thus obtained, the thickness, the in-plane phase difference, Re, and the phase difference in the thicknesswise direction, Rth, were 40 ($\mu$m), -2.0 (nm), and -2.0 (nm), respectively. The photoelastic coefficient C was -1.0 $\times$ 10$^{-12}$ (1/Pa). The sum of the tensile strength in the conveying direction and the tensile strength in the widthwise direction was 160 (MPa), and the sum of the number of times of flexing that, when the film was flexed in the conveying direction, caused breaking, and the number of times of flexing that, when the film was flexed in the widthwise direction, caused breaking was 18 (times).

The film was an optical film that was highly transparent and that satisfied both low birefringence and cracking resistance requirements.

Example 10

A film was produced in the same manner as in Example 9, except that the discharge velocity of the molten resin delivered through the lip of the T-die, $V_1$, the surface velocity of the casting roll, $V_2$, and the ratio $V_2/V_1$ were 1.0 (m/min), 1.2 (m/min), and 1.2(-), respectively. The film thus obtained had a thickness of 40 ($\mu$m). The tensile strength of the film was measured and was found to be less than 140 (MPa) in terms of the sum of the tensile strength in the conveying direction and the tensile strength in the widthwise direction.

While maintaining the ratio $V_2/V_1$ at 1.2(-), a film was again produced by regulating the rotation speed of the screw in the extruder, the rotation speed of the casting roll, and the lip clearance in the T-die in the step of film formation so that the thickness of the film after the drawing step was 40 ($\mu$m).

The film thus obtained was subjected to free end uniaxial drawing with a film drawing machine IMC-190A manufactured by Imoto Machinary Co., Ltd. to obtain a drawn film. The drawing ratio in the conveying direction was 1.2 times (-), the drawing speed was 2.9 times/min, and the drawing temperature was (glass transition temperature) + 9°C, that is, 112°C. The thickness of the film after drawing was 40 $\mu$m.

For the drawn film thus obtained, the in-plane phase difference, Re, and the phase difference in the thicknesswise direction, Rth, were -4.0 (nm) and -3.0 (nm), respectively. The photoelastic coefficient C was -1.0 $\times$ 10$^{-12}$ (1/Pa). The sum of the tensile strength in the conveying direction and the tensile strength in the widthwise direction was 160 (MPa). The sum of the number of times of flexing that, when the film was flexed in the conveying direction, caused breaking, and the number of times of flexing that, when the film was flexed in the widthwise direction, caused breaking was 15 (times).

The drawn film was an optical film that was highly transparent and that satisfied both low birefringence and cracking resistance requirements.

Example 11

Methyl methacrylate was provided as an (meth)acrylate monomer (A), and phenoxyethyl methacrylate was provided as an (meth)acrylate monomer (B). A particulate polymer (hereinafter sometimes referred to as "polymer (B-2)") was obtained by copolymerizing 82% by weight of methyl methacrylate and 18% by weight of phenoxyethyl methacrylate by suspension polymerization. The weight average molecular weight of the polymer (B-2) was measured by gel permeation chromatography and was found to be 1.8 $\times$ 10$^5$. Further, the glass transition temperature of the polymer (B-2) was measured by differential scanning calorimetry and was found to be 101°C.

A film was produced in the same manner as in Example 1, except that the polymer (B-2) was used instead of the polymer (A-1). In Example 11, the discharge velocity of the molten resin delivered through the lip of the T-die, $V_1$, the surface velocity of the casting roll, $V_2$, and the ratio $V_2/V_1$ were 0.4 (m/min), 1.0 (m/min), and 2.5(-), respectively. For the film thus obtained, the thickness, the in-plane phase difference, Re, and the phase difference in the thicknesswise direction, Rth, were 40 ($\mu$m), 1.0 (nm), and 0.5 (nm), respectively. The photoelastic coefficient C was 4.0 $\times$ 10$^{-12}$ (1/Pa). The sum of the tensile strength in the conveying direction and the tensile strength in the widthwise direction was 145 (MPa). The sum of the number of times of flexing that, when the film was flexed in the conveying direction, caused breaking, and the number of times of flexing that, when the film was flexed in the widthwise direction, caused breaking was 11 (times).

The film was an optical film that was highly transparent and that satisfied both low birefringence and cracking resistance requirements.

Example 12

A film was produced in the same manner as in Example 11, except that the discharge velocity of the molten resin delivered through the lip of the T-die, $V_1$, the surface velocity of the casting roll, $V_2$, and the ratio $V_2/V_1$ were 1.0

(m/min), 1.2 (m/min), and 1.2(-), respectively. The film had a thickness of 40 $\mu$m. The tensile strength of the film after the film forming step was measured and was found to be less than 140 (MPa) in terms of the sum of the tensile strength in the conveying direction and the tensile strength in the widthwise direction.

While maintaining the ratio $V_2/V_1$ at 1.2(-), a film was again produced by regulating the rotation speed of the screw in the extruder, the rotation speed of the casting roll, and the lip clearance in the T-die in the step of film formation so that the thickness of the film after the drawing step was 40 ($\mu$m).

The film thus obtained was subjected to simultaneous biaxial drawing with a film drawing machine IMC-190A manufactured by Imoto Machinary Co., Ltd. to obtain a drawn film. The drawing ratio was 1.2 times (-) in both the conveying direction and the widthwise direction, the drawing speed was 2.9 times/min, and the drawing temperature was (glass transition temperature) + 9°C, that is, 110°C. The thickness of the film after drawing was 40 $\mu$m.

For the drawn film thus obtained, the in-plane phase difference, Re, and the phase difference in the thicknesswise direction, Rth, were 1.0 (nm) and 2.0 (nm), respectively. The photoelastic coefficient C was $4.0 \times 10^{-12}$ (1/Pa). The sum of the tensile strength in the conveying direction and the tensile strength in the widthwise direction was 200 (MPa). The sum of the number of times of flexing that, when the film was flexed in the conveying direction, caused breaking, and the number of times of flexing that, when the film was flexed in the widthwise direction, caused breaking was 150 (times).

The drawn film was an optical film that was highly transparent and that satisfied both low birefringence and cracking resistance requirements.

Example 13

Methyl methacrylate was provided as an (meth)acrylate monomer (A), and phenoxyethyl methacrylate was provided as an (meth)acrylate monomer (B). A particulate polymer (hereinafter sometimes referred to as "polymer (B-3)") was obtained by copolymerizing 75% by weight of methyl methacrylate and 25% by weight of phenoxyethyl methacrylate by suspension polymerization. The weight average molecular weight of the polymer (B-3) was measured by gel permeation chromatography and was found to be $1.8 \times 10^5$. Further, the glass transition temperature of the polymer (B-3) was measured by differential scanning calorimetry and was found to be 95°C.

A film was produced in the same manner as in Example 1, except that the polymer (B-3) was used instead of the polymer (A-1). In Example 13, the discharge velocity of the molten resin delivered through the lip of the T-die, $V_1$, the surface velocity of the casting roll, $V_2$, and the ratio $V_2/V_1$ were 0.4 (m/min), 1.0 (m/min), and 2.5(-), respectively. For the film thus obtained, the thickness, the in-plane phase difference, Re, and the phase difference in the thicknesswise direction, Rth, were 40 ($\mu$m), 6.0 (nm), and 5.0 (nm), respectively. The photoelastic coefficient C was $7.5 \times 10^{-12}$ (1/Pa). The sum of the tensile strength in the conveying direction and the tensile strength in the widthwise direction was 140 (MPa). The sum of the number of times of flexing that, when the film was flexed in the conveying direction, caused breaking, and the number of times of flexing that, when the film was flexed in the widthwise direction, caused breaking was 11 (times).

The film was an optical film that was highly transparent and that satisfied both low birefringence and cracking resistance requirements.

Example 14

A film was produced using the polymer (B-3) as used in Example 13 while regulating the rotation speed of the screw in the extruder and the lip clearance in the T-die in the step of film formation so that the thickness of the film after the drawing step was 40 ($\mu$m). The discharge velocity of the molten resin delivered through the lip of the T-die, $V_1$, the surface velocity of the casting roll, $V_2$, and the ratio $V_2/V_1$ were 0.4 (m/min), 1.0 (m/min), and 2.5(-), respectively. The film thus obtained was subjected to simultaneous biaxial drawing with a film drawing machine IMC-190A manufactured by Imoto Machinary Co., Ltd. to obtain a drawn film. The drawing ratio was 1.2 times (-) in both the conveying direction and the widthwise direction, the drawing speed was 2.9 times/min, and the drawing temperature was (glass transition temperature) + 9°C, that is, 104°C. The thickness of the film after drawing was 40 $\mu$m.

For the drawn film thus obtained, the in-plane phase difference, Re, and the phase difference in the thicknesswise direction, Rth, were 7.0 (nm) and 8.0 (nm), respectively. The photoelastic coefficient C was $7.5 \times 10^{-12}$ (1/Pa). The sum of the tensile strength in the conveying direction and the tensile strength in the widthwise direction was 150 (MPa). The sum of the number of times of flexing that, when the film was flexed in the conveying direction, caused breaking, and the number of times of flexing that, when the film was flexed in the widthwise direction, caused breaking was 18 (times).

The drawn film was an optical film that was highly transparent and that satisfied both low birefringence and cracking resistance requirements.

Example 15

A film was produced in the same manner as in Example 13, except that the discharge velocity of the molten resin delivered through the lip of the T-die, $V_1$, the surface velocity of the casting roll, $V_2$, and the ratio $V_2/V_1$ were 0.25 (m/min), 1.0 (m/min), and 4.0(-), respectively.

For the film thus obtained, the in-plane phase difference, Re, and the phase difference in the thicknesswise direction, Rth, were 8.0 (nm) and 7.5 (nm), respectively. The photoelastic coefficient C was $7.5 \times 10^{-12}$ (1/Pa). The sum of the tensile strength in the conveying direction and the tensile strength in the widthwise direction was 150 (MPa). The sum of the number of times of flexing that, when the film was flexed in the conveying direction, caused breaking, and the number of times of flexing that, when the film was flexed in the widthwise direction, caused breaking was 18 (times).

The film was an optical film that was highly transparent and that satisfied both low birefringence and cracking resistance requirements.

Comparative Example 1

A particulate homopolymer consisting of 100% by weight of methyl methacrylate alone was prepared by suspension polymerization. The homopolymer of methyl methacrylate had a negative intrinsic birefringence and a negative photoelastic coefficient. The weight average molecular weight of the polymer was measured by gel permeation chromatography and was found to be $1.8 \times 10^5$. Further, the glass transition temperature of the polymer was measured by differential scanning calorimetry and was found to be 109°C.

A film was produced in the same manner as in Example 1, except that the homopolymer was used. The discharge velocity of the molten resin delivered through the lip of the T-die, $V_1$, the surface velocity of the casting roll, $V_2$, and the ratio $V_2/V_1$ were 1.0 (m/min), 1.2 (m/min), and 1.2(-), respectively. For the film thus obtained, the thickness, the in-plane phase difference, Re, and the phase difference in the thicknesswise direction, Rth, were 40 ($\mu$m), -3.0 (nm), and -2.5 (nm), respectively. The photoelastic coefficient C was $-4.5 \times 10^{-12}$ (1/Pa).

The tensile strength of the film was measured and was found to be 130 (MPa) in terms of the sum of the tensile strength in the conveying direction and the tensile strength in the widthwise direction. The film was subjected to a flexing test. As a result, the sum of the number of times of flexing that, when the film was flexed in the conveying direction, caused breaking, and the number of times of flexing that, when the film was flexed in the widthwise direction, caused breaking was 4 (times).

The film was visually inspected. As a result, the film was not opaque but was highly transparent. Further, since both the absolute value of Re and the absolute value of Rth were not more than 8 (nm) and, at the same time, the photoelastic coefficient C was not more than $8 \times 10^{-12}$ (1/Pa), the film, even when used as a polarizing plate protective film in a liquid crystal display device, did not cause a deterioration in image quality. However, the sum of the tensile strength in the conveying direction and the tensile strength in the widthwise direction was low and 130 (MPa). Further, the sum of the number of times of flexing that, when the film was flexed in the conveying direction, caused breaking, and the number of times of flexing that, when the film was flexed in the widthwise direction, caused breaking was less than 10 (times). As a result of a heat shock test of the polarizing plate, the film suffered from cracking. That is, it was found that this film had low cracking resistance and could not be satisfactorily used as an optical film.

Comparative Example 2

A film of the homopolymer of methyl methacrylate prepared in Comparative Example 1 had a low tensile strength of 130 (MPa) in terms of the sum of the tensile strength in the conveying direction and the tensile strength in the widthwise direction and thus had low cracking resistance, making it impossible to be satisfactorily used as an optical film. Therefore, in Comparative Example 2, the film was drawn. Specifically, the film was produced by regulating the rotation speed of the screw in the extruder and the lip clearance in the T-die in the film forming step under conditions of a discharge velocity of the molten resin delivered through the lip of the T-die, $V_1$, of 1.0 (m/min) and a surface velocity of the casting roll, $V_2$, of 1.2 (m/min) while maintaining the ratio $V_2/V_1$ at 1.2(-) so that the thickness of the film after drawing was 40 ($\mu$m).

The film thus obtained was subjected to simultaneous biaxial drawing with a film drawing machine IMC-190A manufactured by Imoto Machinary Co., Ltd. to obtain a drawn film sample. The drawing ratio was 1.2 times (-) in both the conveying direction and the widthwise direction, the drawing speed was 2.9 times/min, and the drawing temperature was (glass transition temperature) +9°C, that is, 110°C. The thickness of the film after drawing was 40 $\mu$m.

For the drawed film thus obtained, the in-plane phase difference, Re, and the phase difference in the thicknesswise direction, Rth, were -6.0 (nm) and -12.0 (nm), respectively. The photoelastic coefficient C was $-4.5 \times 10^{-12}$ (1/Pa). The sum of the tensile strength in the conveying' direction and the tensile strength in the widthwise direction was 139 (MPa). The sum of the number of times of flexing that, when the film was flexed in the conveying direction, caused breaking, and the number of times of flexing that, when the film was flexed in the widthwise direction, caused breaking was 9 (times).

The film was visually inspected. As a result, the film was not opaque but was highly transparent. The film, however, had an absolute value of the phase difference in the thicknesswise direction, Rth, of larger than 8 (nm) and, when used as a protective film for a polarizing plate in a liquid crystal display device, caused a deterioration in image quality. Further, the sum of the tensile strength in the conveying direction and the tensile strength in the widthwise direction was less than 140 (MPa), and the sum of the number of times of flexing that, when the film was flexed in the conveying direction, caused breaking, and the number of times of flexing that, when the film was flexed in the widthwise direction, caused breaking was less than 10 (times). As a result of a heat shock test of a polarizing plate, the film suffered from cracking. Thus, when the homopolymer of methyl methacrylate was used as a material, the resultant film, even when drawn, did not simultaneously satisfy low birefringence and cracking resistance requirements that are required as protective films for polarizing plates.

Comparative Example 3

A homopolymer of methyl methacrylate was prepared by polymerization as in Comparative Example 1. The homopolymer of methyl methacrylate was extruded into a film by a method in which the main chain in the polymer was oriented on a higher level on a film plane as compared with Comparative Example 1. That is, the discharge velocity of the molten resin delivered through the lip of the T-die, $V_1$, the surface velocity of the casting roll, $V_2$, and the ratio $V_2/V_1$ were 0.25 (m/min), 1.0 (m/min), and 4(-), respectively. For the film thus obtained, the thickness, the in-plane phase difference, Re, and the phase difference in the thicknesswise direction, Rth, were 40 ($\mu$m), -9.0 (nm), and -8.5 (nm), respectively. The photoelastic coefficient C was $-4.5 \times 10^{-12}$ (1/Pa).

The tensile strength of the film was measured and was found to be 140 (MPa) in terms of the sum of the tensile strength in the conveying direction and the tensile strength in the widthwise direction. The film was subjected to a flexing test. As a result, the sum of the number of times of flexing that, when the film was flexed in the conveying direction, caused breaking, and the number of times of flexing that, when the film was flexed in the widthwise direction, caused breaking was 10 (times).

Since the sum of the tensile strength in the conveying direction and the tensile strength in the widthwise direction was 140 (MPa) and the sum of the number of times of flexing that, when the film was flexed in the conveying direction, caused breaking, and the number of times of flexing that, when the film was flexed in the widthwise direction, caused breaking was 10 (times), cracking could be barely avoided in a heat shock test of a polarizing plate. The film, when visually inspected, was not opaque but was highly transparent. The film, however, had an absolute value of the in-plane phase difference, Re, of larger than 8 (nm) and, when used as a protective film for a polarizing plate in a liquid crystal display device, caused a deterioration in image quality. Thus, when the homopolymer of methyl methacrylate was used as a material, the resultant film, even when the ratio $V_2/V_1$ was large in the film forming step, did not simultaneously satisfy low birefringence and cracking resistance requirements that are required as protective films for polarizing plates.

Comparative Example 4

Polymer (A-2) was obtained in the same manner as in Example 3. The polymer (A-2) was introduced into an extruder, and an attempt was made to form a thickness of 40 ($\mu$m) by regulating the rotation speed of the screw in the extruder and the lip clearance in the T-die so as to provide a discharge velocity of the molten resin delivered through the lip of the T-die, $V_1$, of 1.0 (m/min) and a surface velocity of the casting roll, $V_2$, of 1.15 (m/min), that is, $V_2/V_1$ of 1.15(-). However, during the convey of the film cooled and solidified on the casting roll through a pass roll, or during winding of the film around a winding roll, the film was broken and, thus, the film could not be stably prepared.

Comparative Example 5

Polymer (A-2) was obtained in the same manner as in Example 3. The polymer (A-2) was introduced into an extruder, and an attempt was made to form a thickness of 40 ($\mu$m) by regulating the rotation speed of the screw in the extruder and the lip clearance in the T-die so as to provide a discharge velocity of the molten resin delivered through the lip of the T-die, $V_1$, of 0.24 (m/min) and a surface velocity of the casting roll, $V_2$, of 3.84 (m/min), that is, $V_2/V_1$ of 16(-). However, the molten resin located between the front end of the lip in the T-die and the casting roll was disadvantageously unevenly drawn and deformed. Consequently, the film had uneven thickness, that is, had a thickness of 80 ($\mu$m) in a thick portion and a thickness of 10 ($\mu$m) in a thin portion.

Comparative Example 6

Polymer (A-3) was obtained in the same manner as in Example 7. The polymer (A-3) was introduced into an extruder, and a film was formed under conditions of a discharge velocity of the molten resin delivered through the lip of the T-die, $V_1$, of 0.4 (m/min) and a surface velocity of the casting roll, $V_2$, of 1.0 (m/min), that is, $V_2/V_1$ of 2.5(-). The film thus obtained was subjected to biaxial drawing with the same apparatus as used in Example 8 to obtain a drawn film sample. The drawing ratio was 3.1 times (-) in both the conveying direction and the widthwise direction, the drawing speed was 2.9 times/min, and the drawing temperature was (glass transition temperature) +9°C, that is, 110°C. The thickness of the film after drawing was 40 $\mu$m.

For the drawn film thus obtained, the in-plane phase difference, Re, and the phase difference in the thicknesswise direction, Rth, were 1.5 (nm) and 2.5 (nm), respectively. The photoelastic coefficient C was $6.0 \times 10^{-12}$ (1/Pa). The sum of the tensile strength in the conveying direction and the tensile strength in the widthwise direction was 340 (MPa). The sum of the number of times of flexing that, when the film was flexed in the conveying direction, caused breaking, and the number of times of flexing that, when the film was flexed in the widthwise direction, caused breaking was 330 (times).

The film was visually inspected. As a result, the film was cloudy and had poor transparency. Accordingly, when the film was used as a protective film for a polarizing plate in a liquid crystal display device, a deterioration in image quality was observed.

Comparative Example 7

A particulate polymer (hereinafter sometimes referred to as "polymer (B-4)") was obtained by selecting methyl methacrylate as (meth)acrylate monomer (A) and phenoxyethyl methacrylate as (meth)acrylate monomer (B) and copolymerizing 55% by weight of methyl methacrylate and 45% by weight of phenoxyethyl methacrylate by suspension polymerization. The weight average molecular weight of the polymer (B-4) was measured by gel permeation chromatography and was found to be $1.8 \times 10^5$. Further, the glass transition temperature of the polymer (B-4) was measured by differential scanning calorimetry and was found to be 85°C.

The polymer (B-4) was introduced into an extruder for film formation. A film was formed under conditions of a discharge velocity of the molten resin delivered through the lip of the T-die, $V_1$, of 0.25 (m/min) and a surface velocity of the casting roll, $V_2$, of 3.75 (m/min), that is, $V_2/V_1$ of 15(-). For the film thus obtained, the thickness, the in-plane phase difference, Re, and the phase difference in the thicknesswise direction, Rth, were 40 ($\mu$m), 23.0 (nm), and 18.0 (nm), respectively. The photoelastic coefficient C was $18.0 \times 10^{-12}$ (1/Pa). The sum of the tensile strength in the conveying direction and the tensile strength in the widthwise direction was 140 (MPa). The sum of the number of times of flexing that, when the film was flexed in the conveying direction, caused breaking, and the number of times of flexing that, when the film was flexed in the widthwise direction, caused breaking was 11 (times).

The film was not opaque but was highly transparent. However, both the absolute value of Re and the absolute value of Rth of the film were larger than 8 (nm), and the photoelastic coefficient C was also larger than $8 \times 10^{-12}$ (1/Pa). Accordingly, the film, when used as a protective film for a polarizing plate in a liquid crystal display device, caused a deterioration in image quality. Thus, when the polymer composed of 55% by weight of methyl methacrylate and 45% by weight of phenoxyethyl methacrylate was used as a material, the film did not simultaneously satisfy low birefringence and cracking resistance requirements that are required as protective films for polarizing plates.

The results of Examples and Comparative Examples are shown in Table 1-4. In the tables, the transparency was evaluated by visual inspection. The results were judged as A when the film was not opaque but was highly transparent; and as B when the film was opaque, that is, had low transparency.

Table 1

| | | Ratio of monomers (% by wight) | | $V_2/V_1$ | Drawning ratio | |
| | | Monomer (A) | Monomer (B) | | Conveying direction | Widthwise direction |
| | | Methyl methacrylate | Benzyl methacrylate | | | |
| | Example 1 | 98 | 2 | 2.5 | Not drawn | Not drawn |
| | Example 2 | 98 | 2 | 4 | Not drawn | Not drawn |
| | Example 3 | 92 | 8 | 2.5 | Not drawn | Not drawn |
| | Example 4 | 92 | 8 | 15 | Not drawn | Not drawn |
| | Example 5 | 92 | 8 | 1.2 | 1.2 | Not drawn |
| | Example 6 | 92 | 8 | 1.2 | 1.2 | 1.2 |
| | Example 7 | 82 | 18 | 2.5 | Not drawn | Not drawn |
| | Example 8 | 82 | 18 | 1.2 | 1.8 | 1.8 |

(continued)

| | Methyl methacrylate | Phenoxyethyl methacrylate | | | |
|---|---|---|---|---|---|
| Example 9 | 92 | 8 | 2.5 | Not drawn | Not drawn |
| Example 10 | 92 | 8 | 1.2 | 1.2 | Not drawn |
| Example 11 | 82 | 18 | 2.5 | Not drawn | Not drawn |
| Example 12 | 82 | 18 | 1.2 | 1.2 | 1.2 |
| Example 13 | 75 | 25 | 2.5 | Not drawn | Not drawn |
| Example 14 | 75 | 25 | 2.5 | 1.2 | 1.2 |
| Example 15 | 75 | 25 | 4 | Not drawn | Not drawn |

Table 2

| | Ratio of monomers (% by weight) | | $V_2/V_1$ | Drawning ratio | |
|---|---|---|---|---|---|
| | Monomer (A) | Monomer (B) | | Conveying direction | Widthwise direction |
| | Methyl methacrylate | Benzyl methacrylate | | | |
| Comparative Example 1 | 100 | 0 | 1.2 | Not drawn | Not drawn |
| Comparative Example 2 | 100 | 0 | 1.2 | 1.2 | 1.2 |
| Comparative Example 3 | 100 | 0 | 4.0 | Not drawn | Not drawn |
| Comparative Example 4 | 92 | 8 | 1.15 | Not drawn | Not drawn |
| Comparative Example 5 | 92 | 8 | 16 | Not drawn | Not drawn |
| Comparative Example 6 | 82 | 18 | 2.5 | 3.1 | 3.1 |
| | Methyl methacrylate | Phenoxyethyl methacrylate | | | |
| Comparative Example 7 | 55 | 45 | 15 | Not drawn | Not drawn |

Table 3

| | Re (nm) | Rth (nm) | Photoelastic coefficient C ($10^{-12}$/Pa) | Sum of tensile strengths (MPa) | Sum of times of flexing | Visual evaluation of transparency |
|---|---|---|---|---|---|---|
| Example 1 | -4.0 | -3.5 | -3.5 | 143 | 10 | A |
| Example 2 | -8.0 | -7.0 | -3.5 | 166 | 18 | A |
| Example 3 | -1.0 | -1.0 | 0.1 | 160 | 20 | A |
| Example 4 | -5.0 | -3.0 | 0.1 | 180 | 40 | A |

(continued)

|  | Re (nm) | Rth (nm) | Photoelastic coefficient C ($10^{-12}$/Pa) | Sum of tensile strengths (MPa) | Sum of times of flexing | Visual evaluation of transparency |
|---|---|---|---|---|---|---|
| Example 5 | -6.5 | -4.0 | 0.1 | 165 | 20 | A |
| Example 6 | -1.0 | -8.0 | 0.1 | 200 | 66 | A |
| Example 7 | 0.5 | 0.5 | 6.0 | 160 | 22 | A |
| Example 8 | 1.0 | 2.0 | 6.0 | 325 | 289 | A |
| Example 9 | -2.0 | -2.0 | -1.0 | 160 | 18 | A |
| Example 10 | -4.0 | -3.0 | -1.0 | 160 | 15 | A |
| Example 11 | 1.0 | 0.5 | 4.0 | 145 | 11 | A |
| Example 12 | 1.0 | 2.0 | 4.0 | 200 | 150 | A |
| Example 13 | 6.0 | 5.0 | 7.5 | 140 | 11 | A |
| Example 14 | 7.0 | 8.0 | 7.5 | 150 | 18 | A |
| Example 15 | 8.0 | 7.5 | 7.5 | 150 | 18 | A |

Table 4

|  | Re (nm) | Rth (nm) | Photoelastic coefficient C ($10^{-12}$/Pa) | Sum of tensile strengths (MPa) | Sum of times of flexing | Visual evaluation of transparency |
|---|---|---|---|---|---|---|
| Comparative Example 1 | -3.0 | -2.5 | -4.5 | 130 | 4 | A |
| Comparative Example 2 | -6.0 | -12.0 | -4.5 | 139 | 9 | A |
| Comparative Example 3 | -9.0 | -8.5 | -4.5 | 140 | 10 | A |
| Comparative Example 4 | Film was broken during conveying, making it impossible to wind the film. | | | | | |
| Comparative Example 5 | Evaluation was impossible because of severe uneven film thickness. | | | | | |
| Comparative Example 6 | 1.5 | 2.5 | 6.0 | 340 | 330 | B |
| Comparative Example 7 | 23.0 | 18.0 | 18.0 | 140 | 11 | A |

Industrial Applicability

The present invention can provide an optical film that is small in both orientation birefringence and photoelastic birefringence and is excellent in mechanical properties such as flex resistance, cracking resistance, and tensile strength, and a liquid crystal display device comprising the optical film.

**Claims**

1.    An optical film produced by continuously discharging a molten resin on a casting roll through a die lip of an extruder, wherein the molten resin comprises a copolymer of 75 to 99% by weight of an (meth)acrylate monomer (A) that, when homopolymerized, has a negative intrinsic birefringence, and 1 to 25% by weight of an (meth)acrylate monomer (B) that, when homopolymerized, has a positive intrinsic birefringence, and a velocity ratio $V_2/V_1$ of 1.2 to 15 is satisfied wherein $V_1$ represents a discharge velocity of the molten resin from the die lip, m/min; and $V_2$ represents a surface velocity of the casting roll, m/min.

2.    The optical film according to claim 1, wherein the sign of a photoelastic coefficient of a homopolymer of the (meth)acrylate monomer (A) is opposite to the sign of the photoelastic coefficient of a homopolymer of the (meth)acrylate monomer (B).

3.    The optical film according to claim 1 or 2, wherein both the absolute value of an in-plane phase difference Re and the absolute value of a through-thickness phase difference Rth are not more than 8 nm.

4.    The optical film according to any one of claims 1 to 3, wherein the absolute value of the photoelastic coefficient is not more than $8 \times 10^{-12}$ (/Pa).

5.    The optical film according to any one of claims 1 to 4, wherein the sum of the tensile strength in a conveying direction caused by the casting roll and the tensile strength in a widthwise direction perpendicular to the conveying direction is 140 MPa to 330 MPa.

6.    A liquid crystal display device comprising an optical film according to any one of claims 1 to 5.

7.    A method for producing an optical film, the method comprising a film forming step of continuously discharging a molten resin on a casting roll through a die lip of an extruder, wherein
the molten resin contains a copolymer of (A) 75 to 99% by weight of an (meth)acrylate monomer that, when homopolymerized, has a negative intrinsic birefringence, and (B) 1 to 25% by weight of an (meth)acrylate monomer that, when homopolymerized, has a positive intrinsic birefringence, and
a velocity ratio $V_2/V_1$ of 1.2 to 15 is satisfied wherein $V_1$ represents a discharge velocity of the molten resin from the die lip, m/min; and $V_2$ represents a surface velocity of the casting roll, m/min.

## INTERNATIONAL SEARCH REPORT

| International application No. |
|---|
| PCT/JP2012/074557 |

A.  CLASSIFICATION OF SUBJECT MATTER
*B29C47/88*(2006.01)i, *B29C47/92*(2006.01)i, *G02B1/04*(2006.01)i, *B29K33/04*
(2006.01)n, *B29L7/00*(2006.01)n

According to International Patent Classification (IPC) or to both national classification and IPC

B.  FIELDS SEARCHED

Minimum documentation searched (classification system followed by classification symbols)
B29C47/00-47/96, C08J5/18, B29C47/92, G02B1/04

Documentation searched other than minimum documentation to the extent that such documents are included in the fields searched
Jitsuyo Shinan Koho          1922-1996   Jitsuyo Shinan Toroku Koho   1996-2012
Kokai Jitsuyo Shinan Koho    1971-2012   Toroku Jitsuyo Shinan Koho   1994-2012

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 2008-50550 A  (Asahi Kasei Chemicals Corp.), 06 March 2008 (06.03.2008), entire text & US 2008/0266493 A1      & EP 1932879 A1 & WO 2007/043356 A1      & WO 2007/061041 A1 & KR 10-2008-0053359 A    & CN 101283040 A & KR 10-0974978 B         & TWB 00I335344 & AT 541228 T | 1-7 |
| A | WO 2009/84541 A1  (Asahi Kasei Chemicals Corp.), 09 July 2009 (09.07.2009), entire text & JP 4717947 B             & US 2011/0009585 A1 & WO 2010/013557 A1      & CN 101910223 A & KR 10-2010-0097183 A    & TW 200930734 A & KR 10-2011-0038094 A    & CN 102112506 A & TW 201004982 A | 1-7 |

[X]  Further documents are listed in the continuation of Box C.          [ ]  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12 December, 2012 (12.12.12) | 25 December, 2012 (25.12.12) |

| Name and mailing address of the ISA/ Japanese Patent Office | Authorized officer |
|---|---|
| Facsimile No. | Telephone No. |

Form PCT/ISA/210 (second sheet) (July 2009)

**EP 2 764 977 A1**

## INTERNATIONAL SEARCH REPORT

| International application No. |
| --- |
| PCT/JP2012/074557 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2009-140916 A (Keio University), 25 June 2009 (25.06.2009), claim 3; paragraph [0055] & US 2009/0168453 A1 | 1-7 |
| P,A | WO 2012/074055 A1 (Nissan Chemical Industries, Ltd.), 07 June 2012 (07.06.2012), entire text (Family: none) | 1-7 |
| A | JP 2009-196193 A (Toray Industries, Inc.), 03 September 2009 (03.09.2009), paragraphs [0128], [0129] (Family: none) | 1-7 |
| A | JP 2008-239739 A (Toray Industries, Inc.), 09 October 2008 (09.10.2008), claim 12 (Family: none) | 1-7 |

Form PCT/ISA/210 (continuation of second sheet) (July 2009)

21

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006308682 A
- JP 2010072135 A

- JP 2001233912 A

**Non-patent literature cited in the description**

- **SHUICHI IWATA ; HISASHI TSUKAHARA ; EISU-KE NIHEI ; YASUHIRO KOIKE.** *Applied Optics,* 1997, vol. 36, 4549-4555